# EUROPÄISCHE PATENTSCHRIFT

(11) **EP 0 333 006 B1**
(45) Veröffentlichungstag und Bekanntmachung des Hinweises auf die Patenterteilung: **26.10.1994**
(21) Anmeldenummer: 89104067.7
(22) Anmeldetag: 08.03.1989
(51) Int. Cl.: G11B 20/10, G11B 27/02, G11B 15/02

(54) **Aufzeichnungsgerät**
Recording apparatus
Appareil d'enregistrement

(30) Priorität: 17.03.1988 DE 3808862
(43) Veröffentlichungstag der Anmeldung: 20.09.1989
(73) Patentinhaber: Deutsche Thomson-Brandt GmbH, 78003 Villingen-Schwenningen (DE)
(72) Erfinder: Kaaden, Jürgen Dipl.-Ing., D-7730 VS-Villingen (DE); Uhde, Dietmar, Dipl.-Ing., D-7744 Königsfeld (DE)

(56) Entgegenhaltungen:
- EP-A- 0 130 091
- US-A- 4 609 949
- PATENT ABSTRACTS OF JAPAN vol. 9, no. 116 (P-357)(1839) 21 Mai 1985,& JP-A-60 1662 (SONY CORPORATION) 7 Januar 1985,
- SMPTE JOURNAL. vol. 96, no. 10, Oktober 1987, NY, US Seiten 943 - 948; P. DARE,
- R. KATSUMI: "Rotating digital audio tape (R-DAT): a format overview"

## Beschreibung

Es ist bei Geräten nach dem Oberbegriff von Anspruch 1 bekannt, die einzelnen Signalquellen durch Vorwahl mittels eines von Hand zu betätigenden Schalters für eine weitere Signalverarbeitung auszuwählen. Nachteilig ist dabei, daß die Auswahl bei jedem Aufnahme- oder Wiedergabevorgang durch den Bedienenden erneut vorgenommen werden muß.

Es ist Aufgabe der Erfindung bei Anliegen von verschiedenen digitalen und analogen Signalen an den einzelnen Eingangsklemmen, z.B. bei einem DAT-Gerät (Digital Audio Tape), ohne Betätigung eines Wahlschalters eine Auswahl der Signalquellen zu ermöglichen.

Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip wird nach einem vorgegebenen Prioritätsschema durch eine im Gerät vorgesehene Detektoreinheit ermittelt, welche der Eingangsklemmen für die weitere Signalverarbeitung ausgewählt wird. Die Detektoreinheit wird von einem Mikroprozessor gesteuert, in welchem das Prioritätsschema für die Auswahl der vorhandenen Eingangsklemmen einprogrammiert oder einprogrammierbar ist. An den Eingangsklemmen stehen dabei, z.B. bei einem DAT-Gerät, folgende Signale zur Auswahl:
1. Digitalsignal, Übertragung mittels Lichtleiter,
2. Digitalsignal, Übertragung mittels Kabel,
3. Analogsignal, Übertragung mittels Kabel.

Die digitalen Signale haben TTL-Pegel und sind bi-phase codiert, festgelegt in STANDARDS AND INFORMATION DOCUMENTS AES 3-1985 (ANSI S4.40-1985). Die möglichen Taktfrequenzen sind 32 kHz, 44,1 kHz und 48 kHz.
Bei mehreren anliegenden Signalen wird dasjenige Signal selektiert, welches durch das Prioritätsschema die höchste Prioritätsstufe hat. Erkennt die Detektorschaltung ein auswertbares Signal, bleibt dieser Schaltzustand erhalten, d.h., dieses Signal wird für die Weiterverarbeitung im Gerät verwendet. Dieses kann aus Qualitätsgründen das Signal sein, welches über das optische Kabel verteilt wird, aber auch entsprechend der eingegebenen Prioritätsstufe jedes andere anliegende Signal sein.

Im folgenden soll die Erfindung anhand eines Ausführungsbeispiels näher erläutert werden.
- Fig. 1: zeigt ein Blockschaltbild für die automatische Signalquellenauswahl
- Fig. 2: zeigt ein Blockschaltbild der Kennungselektronik für die Auswahl von digitalen Eingangssignalen.

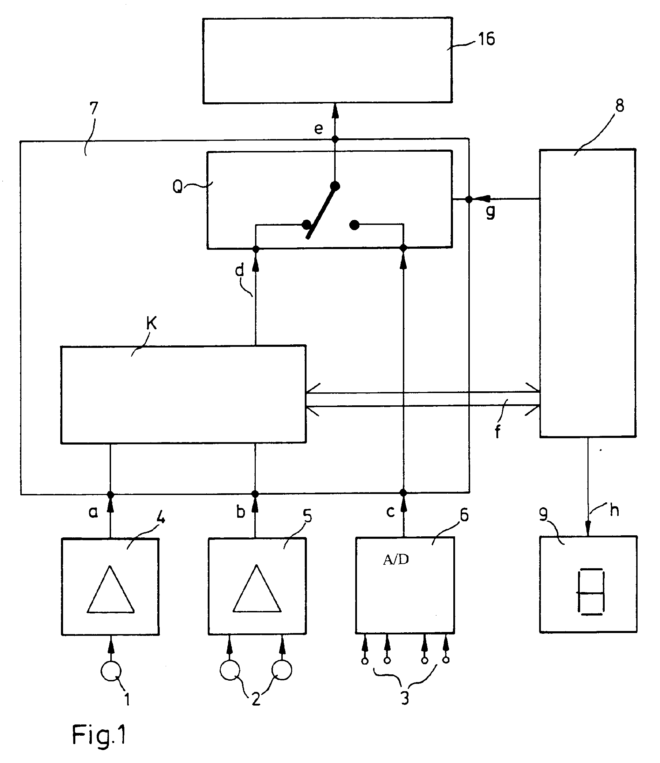

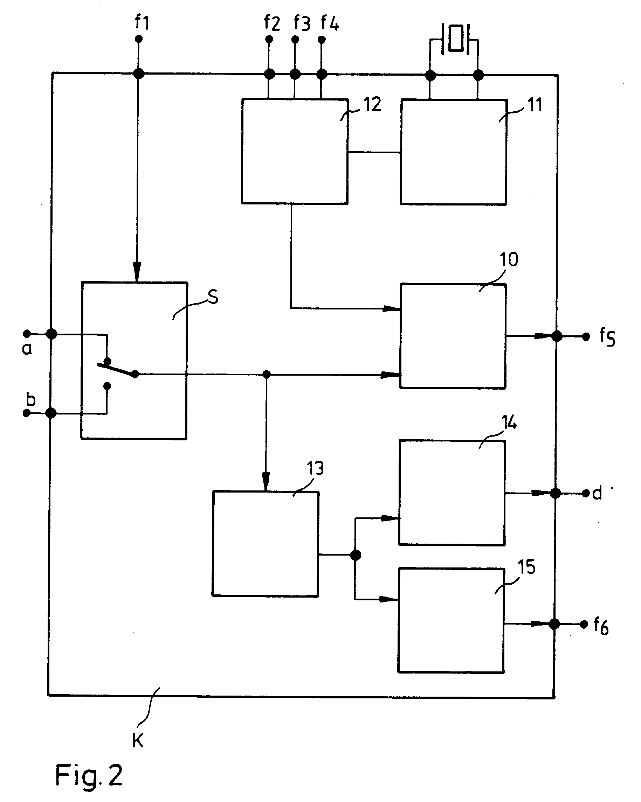

In Fig. 1 sind drei verschiedene Eingangsquellen mit den zugeordneten Eingangsklemmen dargestellt. Die Eingangsklemme 1 ist für ein über Lichtleiter zugeführtes digitales Signal, die Eingangsklemme 2 für ein über Kabel zugeführtes digitales Signal und die Eingangsklemme 3 für ein analoges Signal vorgesehen. Die an den Eingangsklemmen 1 und 2 anstehenden digitalen Signale werden über die Verstärker 4 bzw. 5 den Eingängen a bzw. b der Decodierschaltung 7 zugeführt, während das analoge Signal von Klemme 3 über einen A/D-Wandler 6 der Decodierschaltung 7 an Anschluß c zugeführt wird. Die Decodierschaltung 7 wird von einem Mikroprozessor 8 über die Verbindungen f und g entsprechend eines im Mikroprozessor gespeicherten Ablaufprogrammes mit eingespeichertem Prioritätsschema gesteuert. Mit dem Mikroprozessor 8 ist eine Anzeigeeinheit 9 über Verbindung h verbunden.
Die Decodierschaltung 7 beinhaltet eine Kennungselektronik K und einen elektronischen Schalter Q. Ist z.B. durch das Prioritätsschema als Priorität die Auswahl eines digitalen Signales für die weitere Signalverarbeitung 16 vorgesehen, wird, gesteuert über Verbindung g der Anschluß e von Schalter Q über Leitung d mit der Kennungselektronik K verbunden. Ein weiteres Kriterium, ausgegeben vom Mikroprozessor über Verbindung f, ist die Vorgabe, welches der eventuell anliegenden digitalen Signale als erstes selektiert werden soll. Dieses geschieht durch den Selektionsschalter S in der Kennungselektronikschaltung K, die in Fig. 2 im Detail dargestellt ist. Die Verbindung f, die den Mikroprozessor 8 mit der Kennungselektronikschaltung K verbindet, besteht aus verschiedenen Leitungen f1 - f6 über die Informationen ausgetauscht werden. So wird über Leitung f1 der Sektionsschalter S und über die Leitungen f2, f3 und f4 der Fangbereich für die in der Kennungselektronikschaltung vorhandene PLL-Schaltung 10 gesteuert. über die Leitungen f5 und f6 werden von der Kennungselektronikschaltung K Informationen über den aktuellen Zustand an den Mikroprozessor 8 zurückgegeben, die auch zur Anzeige im Anzeigefeld 9 verwendet werden.

Die Kennungselektronikschaltung K besteht aus folgenden Schaltungsteilen: Die Eingänge für die digitalen Signale a und b werden mittels des elektronisch gesteuerten Schalters S selektiert. Das selektierte Signal wird einerseits der PLL-Schaltung 10 und andererseits einem bi-phase Decoder 13 zugeführt. Mit der PLL-Schaltung 10 ist eine Oszillatorschaltung 11 verbunden, deren Frequenzen durch den programmierbaren Frequenzteiler 12 über die Leitungen f2 - f4 entsprechend der erwartenden Taktfrequenzen der zu selektierenden digitalen Signale mittels Mikroprozessor 8 auswählbar sind.

Der Ausgang von PLL-Schaltung 10 ist über Leitung f5 mit dem Mikroprozessor 8 verbunden und gibt bei "Rasten" eines digitalen Signales auf eine der vorgegebenen Frequenzen eine Rückmeldung an den Mikroprozessor 8. Durch die Rückmeldung wird der Mikroprozessor in seinem Ablaufprogramm für die Selektion gestoppt, d.h. der eingerastete Zustand der Kennungselektronikschaltung K wird aufrechterhalten. Das im bi-phase Decoder 13 decodierte Audio-Datensignal wird über die Abtrennstufe 14 mit Ausgang d und den nachgeschalteten Quellenschalter Q der Signalverarbeitung 16 zugeführt. Außerdem wird das Signal vom Ausgang des bi-phase Decoders 13 einer Abtrennstufe 15 für die im Signal enthaltenen Subcode-Daten zugeführt. Diese Subcode-Daten werden über Leitung f6 für die Anzeige im Anzeigefeld 9 ausgegeben. Die Aufbereitung dieser Daten geschieht im Mikroprozessor 8.

Der Vorgang der Signalauswahl nach dem im Mikroprozessor eingegebenen Prioritätsschema hat folgenden Ablauf:
1. Vorgabe des Schaltzustandes von Schalter Q durch das Prioritätsschema (Digitaleingang oder Analogeingang)
2. Bei gewähltem Digitaleingang, Einstellung des Fangbereiches von PLL 10 durch Vorgabe der zu erwartenden Taktfrequenzen des digitalen Signales, entsprechend dem Prioritätsschema.
3. Rasten von PLL 10 bei einem vorhandenen digitalen Signal auf dessen Taktfrequenz.
4. Stoppen des Selektionsablaufs über Leitung f5 und Verarbeitung des selektierten Signales im Gerät.

Nach abgeschlossener Quellenwahl bleibt der Schaltzustand bis zur Auslösung eines erneuten Suchvorganges, der z.B. durch Eingabe eines Befehles über eine Fernbedienung erfolgen kann, erhalten. Auch kann bei Ausfall der angeschalteten Signalquelle ein erneuter Selektionsvorgang automatisch durch den Mikroprozessor gestartet werden.

## Patentansprüche

1. Aufzeichnungs- und Wiedergabegerät mit einer Prozessorgesteuerten Auswahlschaltung eines aufzuzeichnenden Signals aus einer Vielzahl von dem Gerät zugeführter Quellensignale, **dadurch gekennzeichnet**, daß das Gerät eine Schalt- und Detektoreinheit (7) aufweist, der die Quellensignale (a, b, c) sowie Steuersignale (g, f₁-f₄) eines mit der Schalt- und Detektoreinheit verbundenen Mikroprozessors (8) zugeführt werden, wobei mittels der Steuersignale (g, f₁-f₄) gemäß einem durch das Ablaufprogramm des Mikroprozessors gesteuerten Prioritätsschema der Quellensignalselektion ein Quellensignal selektier-bar ist, indem mittels einer in der Schalt- und Detektoreinheit vorgesehenen, in der Frequenz umschaltbaren PLL-Schaltung (10-12) beim Einrasten derselben auf die Taktfrequenz eines selektierten digitalen Quellensignals ein dem Prozessor (8) zugeführtes Detektionssignal (f₅) erzeugt wird, worauf vom Prozessor das Ablaufprogramm gestoppt und die jeweilige Quellensignalselektion aufrechterhalten wird.

2. Gerät nach Anspruch 1, **dadurch gekennzeichnet**, daß der Fangbereich der PLL-Schaltung (10) auf diskrete Festfrequenzen (f₂-f₄) umschaltbar ist.

3. Gerät nach Anspruch 1, **dadurch gekennzeichnet**, daß der Fangbereich der PLL-Schaltung (10) die Taktfrequenzen aller verarbeitbaren digitalen Quellen umfaßt.

4. Gerät nach Anspruch 1, **dadurch gekennzeichnet**, daß analoge Signalquellen über separate Eingangsklemmen (3) anschließbar sind, deren Signale im Gerät in digitale Signale umgesetzt werden.

5. Gerät nach einem der Ansprüche 1 - 4, **dadurch** **gekennzeichnet**, daß daß bei nichtgerasteter PLL-Schaltung (10) eine analoge Signalquelle für die Signalverarbeitung selektiert ist.

6. Gerät nach einem der Ansprüche 1 - 5, **dadurch gekennzeichnet**, daß nach abgeschlossener Quellenwahl dieser Zustand bei Ausfall der selektierten Signalquelle verändert wird.

7. Gerät nach einem der Ansprüche 1 - 5, **dadurch gekennzeichnet**, daß durch den Mikroprozessor (8) der jeweilige Zustand einer selektierten Quelle abgespeichert wird.

8. Gerät nach einem der Ansprüche 1 - 5, **dadurch gekennzeichnet**, daß durch den Mikroprozessor (8) alle vorkommenden Signalquellen der Reihe nach angewählt werden, und daß der jeweilige Zustand der einzelnen Quellen abgespeichert wird.

9. Gerät nach Anspruch 8, **dadurch gekennzeichnet**, daß der im Mikroprozessor (8) gespeicherte Zustand einer selektierten oder aller Quellen in der Anzeige (9) angezeigt wird.

## Claims

1. A recording and reproduction device with a processor-controlled selection circuit for a signal to be recorded from a plurality of source signals supplied to the device, characterised in that the device has a switching and detector unit (7), to which are suppled the source signals (a,b,c) as well as control signals (g,f₁-f₄) of a microprocessor (8) connected to the switching and detector unit, in which by means of the control signals (g,f₁ - f₄) a source signal can be selected according to a priority schedule for the source signal selection, controlled by the program of the microprocessor, in which a detection signal (f₅) supplied to the processor (8) is generated by means of a PLL circuit (10 - 12) having a switchable frequency and provided in the switching and detector unit by locking of the PLL circuit to the clock frequency of a selected digital source signal, upon which the program is stopped by the processor and the corresponding source signal selection is maintained.

2. A device according to claim 1, characterised in that the lock-in range of the PLL circuit (10) is switchable to discrete fixed frequencies (f₂ - f₄).

3. A device according to claim 1, characterised in that the lock-in range of the PLL circuit (10) embraces the clock frequencies of all the digital sources which can be processed.

4. A device according to claim 1, characterised in that analog signal sources may be connected via separate input terminals (3), the signals of which are converted in the device into digital signals.

5. A device according to any one of claims 1 - 4, characterised in that when the PLL circuit (10) is not locked-in, an analog signal source is selected for the signal processor.

6. A device according to any one of claims 1 - 5, characterised in that after termination of the source selection, this state is changed upon outage of the selected signal source.

7. A device according to any one of claims 1 - 5, characterised in that the current state of a selected source is stored by the microprocessor (8).

8. A device according to any one of claims 1 - 5, characterised in that all occurring signal sources are selected in turn, and in that the respective state of the individual sources is stored.

9. A device according to claim 8, characterised in that the state of a selected or of all sources stored in the microprocessor (8) is indicated in the display unit (9).

## Revendications

1. Appareil d'enregistrement et de lecture avec un circuit piloté par microprocesseur de sélection d'un signal à enregistrer à partir d'une multitude de signaux de source acheminés vers l'appareil, caractérisé en ce que l'appareil présente une unité de commutation et de détection (7) à laquelle sont acheminés les signaux de source (a, b, c) ainsi que les signaux de commande (g, f₁ - f₄) d'un microprocesseur (8) relié à l'unité de commutation et de détection, un signal de source pouvant être sélectionné à l'aide des signaux de commande (g, f₁ - f₄) conformément au schéma des priorités de la sélection de signal de source, commandé par le programme de cycle du microprocesseur, en générant un signal de détection (f₅) acheminé au processeur (8) à l'aide d'un circuit PLL (10-12) prévu dans l'unité de commutation et de détection, dont la fréquence est commutable, lorsque ce circuit s'encliquette sur la fréquence de cycle d'un signal de source numérique sélectionné, ce sur quoi le programme de cycle est arrêté par le microprocesseur et la sélection respective du signal de source est maintenue.

2. Appareil selon revendication 1, caractérisé en ce que la plage de capture du circuit PLL (10) est commutable sur des fréquences fixes discrètes (f₂ - f₄).

3. Appareil selon revendication 1, caractérisé en ce que la plage de capture du circuit PLL (10) comprend les fréquences de cycle de toutes les sources numériques pouvant être traitées.

4. Appareil selon revendication 1, caractérisé en ce que des sources de signaux analogiques peuvent être raccordées via des bornes d'entrée séparées (3), dont les signaux sont convertis dans l'appareil en signaux numériques.

5. Appareil selon l'une des revendications 1 à 4, caractérisé en ce que, lorsque le circuit PLL (10) n'est pas encliqueté, une source de signal analogique est sélectionnée pour le traitement du signal.

6. Appareil selon l'une des revendications 1 à 5, caractérisé en ce que, une fois la sélection des sources terminée, cet état est modifié en cas de panne de la source de signal sélectionnée.

7. Appareil selon l'une des revendications 1 à 5, caractérisé en ce que l'état respectif d'une source sélectionnée est mémorisé par le microprocesseur (8).

8. Appareil selon l'une des revendications 1 à 5, caractérisé en ce que toutes les sources de signaux présentes sont sélectionnées dans l'ordre par le microprocesseur (8), et que l'état respectif des différentes sources est mémorisé.

9. Appareil selon la revendication 8, caractérisé en ce que l'état d'une source sélectionnée ou de toutes les sources, mémorisé dans le microprocesseur (8), est indiqué sur l'affichage (9).
